# EUROPEAN PATENT APPLICATION

(11) **EP 4 443 376 A1**
(43) Date of publication of application: **09.10.2024**
(21) Application number: 21966288.9
(22) Date of filing: 01.12.2021
(51) Int. Cl.: G06Q 50/12

(54) **IMPROVED SYSTEM AND METHOD FOR ROOM RESERVATION AND MANAGEMENT**

(71) Applicant: Iberostar Hoteles y Apartamentos, S.L., 07010 Palma de Mallorca (Illes Balears) (ES)
(72) Inventor: COLOMINA PLASENCIA, José María, 07010 Palma de Mallorca (ES); CANOSA PEREZ, Rubén, 07010 Palma de Mallorca (ES)
(74) Representative: Herrero & Asociados, S.L.
(86) International application number: PCT/ES2021/070867
(87) International publication number: WO 2023/099795

(57) **Abstract**

Electronic method and system for improved reservation and management of rooms in hotel establishments, in an efficient, fast and customized manner and significantly improving the user experience. The proposed method and system allow a client to make a reservation for a certain hotel on certain dates, selecting in the same step the specific room they want to reserve. This is done in a simple and intuitive way for the client and allows the hotel establishment to save resources.

## Description

### OBJECT OF THE INVENTION

The present invention refers to an electronic system and method for booking (by users) and, subsequently managing hotel rooms, which not only allows these activities to be carried out in an efficient, fast and personalized manner and saving resources, but also improves the user experience. This invention is mainly applied in hotel establishments but can be applied in any other activity that requires the reservation and management of rooms or the like.

### BACKGROUND OF THE INVENTION

Currently, it can be said that, in most cases, there are three environments (or, in general, systems or functionalities) that are involved in the distribution, direct reservation and management of rooms in hotel establishments (or more generally speaking, accommodation facilities). Among them, we could highlight the following, as they are the most used:
The first is a content management module or system (CMS). It is a tool that allows creating a work environment for the management of content or products in general, mainly on web pages, by administrators, creators or producers of the products, participants and other users. In this case, the hotel's website (or websites associated with the hotel) is fed with content to communicate in the most efficient way the features of the hotel, its competitive advantages as well as the details of its facilities. The objective is to captivate the user (possible client) and make the user request availability and price for a hotel, for a range of dates and occupancy (number of rooms and people).

These browsing sessions are part of the client's journey in the hotel exploration and selection phase. There are some hotels that offer immersive content from part of their facilities (using Google business tools, Google Street View, or virtual tour with 360° photographs), without the user experience exceeding a mere consumption of information.

Secondly, there is the central reservation module system (CRS), also called the reservation engine. It is a tool that allows editing and updating a hotel's inventory and rate information, so that hotel owners can manage their reservations and process them in real time. It is displayed on the website at the time the user is shown the result of his/her search (hotel, availability, dates and occupancy).

The CRS shows the different room typologies or categories that fit the search, that is, that have commercial availability for those dates and that allow the minimum occupancy indicated (for example: Basic Double Room, Side Sea View Double Room, Junior Suite, etc.). They are generally presented in order from the cheapest to the most expensive. In this step of the reservation process, the user must select one of the categories or room types.

Subsequently or in the same step, there should normally be selected the accommodation regime (with or without breakfast, half board, full board, all inclusive...) in the event that there are several possible regimes, and extras (if any). Once this point has been reached, there are two subsequent steps to complete the reservation: the introduction of personal reservation information and the payment or confirmation of the reservation (sometimes the reserved room does not have to be paid for at this moment but at the hotel, but at least there is usually a step where you should enter some means of payment to confirm the reservation).

This online reservation process is generally carried out many days and even months in advance of the beginning of the accommodation (check-in to the hotel), especially in the case of vacation hotels.

In this process, the price is defined by category/type of room, never by specific room number, since the CRS sells categories and does not know the specific numbering of the rooms in each category.

The main limitation of this CRS system is being unaware of which will be the specific room, its location, its orientation and location within the complex and its facilities, that is, the exact number of the room it will have ("door number"). It is true that the room category may have been chosen and that some of these categories have a small inventory of rooms, but in general the categories in vacation hotels (especially the cheapest ones) consist of high inventories (for example 200 rooms) and located in different parts of the hotel/resort building(s) and at different distances from the lobby, pool, dining room... (some close and others really far away) so the customer experience is not the same; the user will therefore not really know the specific features and location of his/her room (which even generates uncertainty or anxiety for the client). It should be added to the foregoing that the needs for each customer segment are different (family with small children, couples, senior couples with reduced mobility), so the preferences for each of them are usually different.

Thirdly, there is the property management module or system (PMS, "Property Management System"), which is the hotel management system for the operation and management of hotel rooms during the client's accommodation (user). The main functionalities are the assignment of a reservation (where only the room category is indicated at most) to a specific physical room (room number within the reserved category), managing the different states of the room (occupied, dirty, clean , etc.), managing extra expenses generated during the stay and invoicing on the day of departure (check-out). The PMS is usually managed by the hotel reception team and specifically the tasks of assigning reservations by room category to a specific room number are usually carried out at the time of the client's arrival at the hotel or a few days before (generally one week before check-in to the hotel, although this depends on the hotel in question).

Finally, there are some solutions on the market (for example, Iberostar "My Room Online", MRO, in Spanish "Mi habitación online") that allow the client, always after having made a direct reservation (on the hotel's own website), to be able to assign a room number in the same way that in a plane reservation the client assigns himself the seat. These tools simulate the assignment from the hotel reception in the PMS in a web environment managed by the client. The limitation in this case is that the customer has previously purchased a room category in the CRS without knowing the room number and at a later time, sometimes months later, will be able to choose the room number from those available within the category.

Existing systems have serious limitations. And, specifically, none of the four systems described above make it possible to directly reserve a room number with a specific location, views and equipment, assigning it at the same time of booking, in an immersive and experiential process, which merges the functionality of the CMS (since not only information about the hotel is presented but also about each specific room and allows the selection of a specific room), improving the customer experience and everything is done in a simple, fast, error-free way and saving resources (both time as electronic communication resources).

### DESCRIPTION OF THE INVENTION

The present invention provides a method and system for the improved reservation and management of rooms in hotel establishments (or more generally speaking accommodation facilities). Specifically, the proposed system and method allows a client or guest (or, in general, a user) to make a reservation for a specific room (or several) and for the hotel establishment to manage the assignment of said room (and subsequent registration in the hotel or customer "check-in") in a simpler, faster, more accurate and more efficient way than existing systems and methods.

The proposed improved reservation and management invention (called Real Booking Experience or RBE) offers a new, innovative reservation and purchasing experience with a focus on customer experience and efficiency, which allows, among other things, hyper-personalizing the room and reserving the exact room number from the detailed map of the hotel (preferably in 3D). Furthermore, RBE allows the hotel owner to be truly competitive against the main competitors, especially online (online travel agencies, specialized reservation pages, etc., which also represent an additional cost since they charge a commission for intermediation).

The present invention merges the previously described processes into a single experience and process, providing a clear advantage that does not exist in the market that solves, among other things, the customer's frustration in the hotel reservation process due to not being able to choose the exact features of the room in the reservation process.

In a first aspect, the present invention proposes a method for the improved reservation and management of rooms in an accommodation facility (for example a hotel), wherein the method comprises the following steps performed in a module (section) called improved reservation service module, RBE, of at least one electronic server:
a) Receiving from a central reservation module (hotel reservation module) of the accommodation facility, a message with information about an accommodation reservation (at the accommodation facility) requested by a user using an electronic user device (e.g. on a website or mobile application), including such information at least the dates of the accommodation;
b) If the period of time (for example, a number of days) from when the reservation request is made to the start of the accommodation is greater than or equal to (if less, the method is terminated) a pre-established minimum time, (which may be stored in the RBE module), displaying to the user on the electronic device (for example, through the website or mobile application) information about the rooms of the facility including at least location within the facility, availability and price of each of them for the dates of accommodation of each room; said information being obtained from at least the information received from the central reservation module on price and availability of each room category and/or information stored in an availability database of the RBE module;
c) Receiving from the user's electronic device the selection of one or more specific rooms (with a certain room number each) for the reservation;
d) Checking in the availability database if the one or more selected rooms are still available for the dates of the accommodation and if so sending a message to the central reservation module indicating that the reservation can continue;
e) When a confirmation is received from the central reservation module that the reservation of one or more rooms has correctly been made by the user, marking in the availability database said one or more rooms selected as not available for the dates of the accommodation.

In a second aspect, the present invention proposes an electronic system for carrying out the previous method. For example, it proposes an electronic system for the improved reservation and management of rooms in an accommodation facility, wherein the system comprises:
- A central reservation module configured for a user to make an accommodation reservation from a user's electronic device, the module being configured to receive information about the reservation from the user (via a website or application) and to confirm correct completion thereof, and to communicate with an improved reservation service module;
- The improved reservation service module, RBE module, which comprises an availability database and is configured to:
   - Receive from the central reservation module of the accommodation facility a message with information about an accommodation reservation requested by a user through the website or application, including such information at least the dates of the accommodation;
   - If the period of time from when the reservation request is made to the start of the accommodation is greater than or equal to a pre-established minimum time (which may be stored in the RBE module), show the user through the website or application, information about the rooms of the facility including at least location within the facility, availability and price for the dates of each room's accommodation; said information being obtained from at least information received from a central reservation module on price and availability of each room category and/or information stored in the availability database;
   - Receive from the user's electronic device through the website or application, the selection of one or more rooms for the reservation;
   - Check in the availability database if the one or more selected rooms are still available for the dates of the accommodation and if so, send a message to the central reservation module indicating that the reservation can continue;
- When a confirmation is received from the central reservation module that the reservation of one or more rooms has correctly been made by the user, mark in the availability database said one or more rooms selected as not available for the dates of the accommodation.

The present invention relates to a method and system as defined in the independent claims. The dependent claims define advantageous embodiments of the invention.

The invention also relates to a computer program product comprising computer program code adapted to perform the methods of the invention, when said program code is executed on a computer, a digital signal processor, a field programmable gate array, an application-specific integrated circuit, a microprocessor, a microcontroller, or any other form of programmable hardware. A non-transitory digital data storage medium is also provided for storing a computer program comprising instructions that cause a computer running the program to carry out the method described above.

For a more complete understanding of these and other aspects of the invention, its objects and advantages, reference may be made to the following specification and the accompanying drawings.

### BRIEF DESCRIPTION OF THE FIGURES

Next, a series of drawings are briefly described that help to better understand the invention and that are expressly related to an embodiment of said invention that is presented as a non-limiting example thereof.
Figure 1a.- Shows a simplified schematic diagram of the room reservation and assignment process in hotel establishments, according to the state of the art.
Figure 1b.- Shows a simplified schematic diagram of the room reservation and assignment process in hotel establishments, according to a possible embodiment of the invention.
Figure 2.- Schematically shows the workflow of the room reservation and assignment process in hotel establishments, according to a possible embodiment of the invention.
Figure 3.- Schematically shows what the specific integration between an existing CRS system and the RBE system could be like, according to a possible embodiment of the invention.

### DETAILED DESCRIPTION OF THE INVENTION

An electronic method and system is described for the reservation and optimized management of room allocation, for example, in a hotel establishment. The proposed method and system allow a client (user) to make a reservation for a certain hotel on certain dates, receiving exhaustive information about the hotel and selecting in the same step the specific room that he/she wants to reserve based on the information that has been provided. All this is done in a simple way for the client and quickly and efficiently for the hotel establishment.

The present invention allows performing several functionalities that were previously carried out separately and at different times, in the same system and at the same time and process, in addition to providing additional services that are not offered in existing systems, such as the specific selection of the room by the user at the time of reservation. It can be said that it merges the functions of providing the contents and features of the hotel (CMS functionality), making the reservation (CRS functionality) and assigning the room (PMS functionality) into a single process, carried out at the same time of the reservation in an efficient manner and that also allows the selection of the specific room by the user.

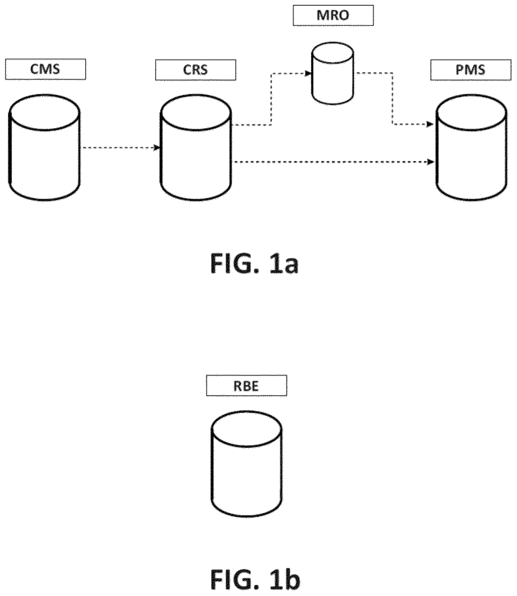

Thus, the room reservation and assignment systems as they currently operate (figure 1a) include the following actions or functionalities:
Before the date of stay or registration or "check-in" date (as a concrete example, for a better understanding of the explanation, let's say 3 months before), the client selects the hotel, for this purpose a web page is normally accessed (directly by the client or an intermediary such as a travel agent) where information about the features of the hotel is provided (CMS functionality) and the client decides that he/she wants to make a reservation at that hotel.

At that same moment, or later (as a concrete example, let's say 2 months before the arrival date), the client makes (and optionally pays) the reservation for one (or more than one) room of a certain type (also called category) he/she wants (CRS functionality); The client does not reserve a specific room number but only, at most, a room type/category.

Later, the receptionist or person in charge at the hotel establishment (not the client) assigns a specific room to said reservation (PMS functionality). This can be done at the time the client arrives at the hotel, although it is usually done in advance (for example, 1 or 2 weeks before).

Optionally, if the hotel allows so, after the reservation and before arrival at the hotel and the hotel has assigned a room (as a concrete example, let's say 3 weeks before arriving at the hotel) the client can select a specific room within of the category/type of room that he/she has booked some time ago (MRO functionality) whenever they are available.

On the contrary, in the solution proposed in the present invention (Figure 1b), all the previous steps are carried out in the same single process and at the same time (reservation time) by virtue of this functionality (RBE) and without having to wait weeks or even months to do them. This not only improves the customer experience (since he/she can see the specific features of each room and select a specific room) but also simplifies the entire process, saving time and resources for the hotel establishment.

Thus, at the same time before the date of the stay (as a specific example, let's say 3 months before although this is a non-limiting example and can be any other), the client accesses all the information about the hotel and each hotel room in order to select not only the hotel but a specific room, reserves the specific room (and optionally pay for it) and that room is assigned to the reservation automatically. In one embodiment, the RBE functionality may automatically inform (e.g., by sending an e-mail) to the hotel (e.g., to the front desk or reservations department) indicating the reservation and room number selected by the customer for said reservation (for the hotel team to assign in the PMS if not done directly by the RBE).

This does not mean that existing systems in hotels have to disappear or be transformed since, as will be explained below, this RBE functionality can in turn use and communicate with existing systems, providing the improvements and additional services that we have indicated.

Next, the detailed and concrete operation of the proposed system will be explained.

The different functionalities or functions indicated will be performed by an electronic device (for example, a server) or set of electronic devices, which in turn may be co-located or distributed in different locations and communicated by any type of wired or wireless communication network. The section (hardware or software) of one or more electronic devices that performs certain functionality is what is known as a module. Each functionality can be carried out on a different device (or set thereof) or the same device (or set thereof) may implement several or all of the indicated functionalities; that is, the same device (for example, a server) may have several modules, each of them performing one of the functionalities, or these modules can be distributed in different devices (servers).

The solution proposed herein can be integrated with existing management systems (for example, CRSs) (or in other words, it can work with existing management systems), which facilitates its use and implementation. This integration can be carried out through one (or several) application programming interface (better known by the acronym API) which is a set of subroutines, functions and procedures that offers a certain tool to be used by another existing tool.

In other words, the device (or servers) or more specifically, the module (or modules) that carry out the proposed solution (RBE) can cooperate with the management modules already existing in the hotels (without having to make significant changes in them), providing an additional service of great value. Communications between the module(s) where the existing functionalities are implemented (CRS, PMS...) and the module(s) where the RBE functionality is implemented will be carried out through one or more communications networks (wired or wireless) of any type, if the modules of the different functionalities are located on different devices (for example, servers).

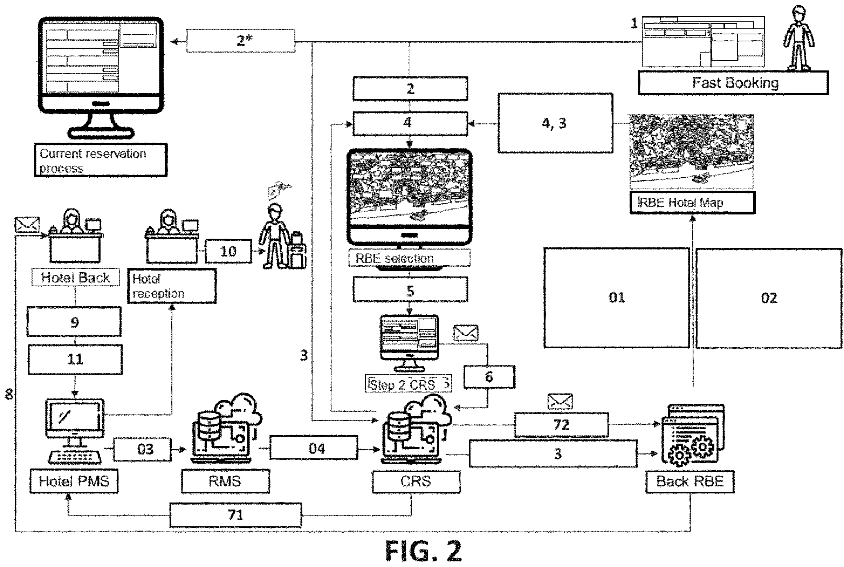

Figure 2 shows the workflow of the proposed solution and how the RBE solution interacts with existing systems, according to an embodiment of the invention. This is just a non-limiting example, for explanatory purposes, and the specific workflow may be different in other embodiments.

Logically, prior to putting it into operation, all the necessary data must be configured and provided for the correct operation of the process (step 01-04 in figure 2). These data will be stored (in one or more databases) and processed in the RBE module (more specifically in the support part of the RBE tool, also called "back" or "back office" of the RBE). This data can be, for example:
Information about hotel features (01): For example, information about hotel facilities, equipment and features of each room (identified by room number), hotel maps, interior and exterior views of each room... These maps and views can be more or less detailed, they can be in 2D or 3D and they can use different technologies; as indicated, in one embodiment the hotel map is an interactive 3D map (so that the user can select which specific parts of the hotel or rooms he/she wants to see in more detail) and the views of the rooms can be 360 degrees.

Availability and pricing information (02): For example, the pricing rules for each room, the availability of each room, the mapping of room categories to specific rooms (i.e. which rooms belong to each category), etc. This information can include, for example, specific rooms that the hotel can block for specific dates and at its convenience in the back office of the RBE tool.

Additionally, to calculate the availability of each room, the system can take into account reservations that have previously been assigned to specific rooms through RBE. For example, if room 1024 has already been reserved for dates in which the client checks availability, the system can consult its own database about the reservations that have already been made. To calculate availability, it can also be taken into account whether some type of minimum advance notice ("release") has been established by the hotel for room reservations, as will be explained later.

All this information will be processed by the server (or servers) running the RBE solution and later displayed to the user (for example, through an appropriate graphical interface). Some of this data will be obtained by RBE support from information provided by the corresponding existing management system, for example, availability information (by room category) can probably be provided by the PMS functionality and price rules (by room category) can be provided by the Revenue Management (RMS) functionality. Thus in one embodiment, the hotel's PMS module will provide the availability of each room category or each room (03) and the RMS module will provide the pricing rules of each room category (04). This information is normally provided through the CRS module, which is usually in direct communication with the RBE module.
- In a first step (1), a user will request availability through a web page (or through an application), indicating the necessary data, such as the selected hotel (if the same system manages more than one hotel), the number and type (adults/children) of occupants for whom he/she wants to make the reservation, number of rooms and the dates of stay. Normally the user who makes the reservation is the client who is going to stay at the hotel but it can also be another person (friend, family member, travel agent, intermediary, hotel customer service telephone service staff...) who makes the reservation in his/her name. This first step is what is called fast booking (known also as "Booking entrance" or "Booking Mask"). This first step generates a call to the internet booking engine (better known as IBE), wherein the entire reservation process will begin. The IBE is responsible for calculating availability based on search parameters provided by the client (during the Fast booking step); The CRS (Central Reservation System) is more complete since it also includes the actions of generating the reservation and storing it.
- Next, based on the system configuration, the CRS reservation process will show the client an input element (this can be an HTML input element called "iframe") or a web component (depending on the case) for the new room selection process. This can be activated through the existing CRS reservation process. In one embodiment, in order to allow the hotel (reception) to manage the selection of rooms without interfering in its daily operations, a minimum advance time for the reservation (better known by the English term "release") is established in the back office of the RBE; this "release" shall be configurable in the CRS or shared through some type of table (or more generally database), for example, with asynchronous update.

In this embodiment, if the number of days from when the reservation is made to the date of the stay is less than that established minimum time (release), the reservation is made through the traditional process (2*), without being able to choose the specific number of room. If the number of days from when the reservation is requested to the date of the stay is greater than that established minimum time or release, the reservation is made through the RBE process (2), with specific room selection. Thus, if the hotel does not want this RBE service to be available until the last minute because it may cause operational problems, then it establishes a "release". If the "release" is met (that is, the advance notice with which the reservation is made is greater than that minimum time or "release"), it allows going to the RBE process, if it is not met then it takes you to the traditional process.

Taking this into account, to carry out this step the traditional CRS reservation system must be adapted to derive the reservation to the traditional reservation process (2*) or derive (2) to the improved reservation process proposed herein (RBE) based on the value of this minimum time parameter ("release") of the RBE system (if there is a "release" time, if there is no "release" time, it will always be derived to the RBE system). To let the CRS know which option to take (2 or 2*), the parameter can be shared via a table (or more generally a database) shared between CRS and RBE (for example, with asynchronous update) or a real-time call from CRS to the RBE system to indicate, depending on the value of this "release" parameter, whether or not the RBE reservation process applies. In general, this action is quite simple and would hardly complicate the system setup.

Thus, this parameter ("release") can be configurable in the CRS or in the IBE (which depends directly on the hotel) or in the RBE system itself (and shared through a table or through a specific call with the IBE/CRS); they are alternative ways of approaching the same solution that will depend on the specific hotel where the RBE solution is applied. If the "release" is established directly in IBE/CRS, it would represent a modification of the traditional IBE/CRS since the release field for RBE does not exist in traditional IBE/CRS systems. This "release" parameter is a field that should vary very little and should be configurable by the hotel, so it can assign to this parameter the value that most interests to the hotel for the optimal functioning of the hotel at all times.
- Next (3), the availability query with the appropriate data (date, number of rooms) is transferred to the hotel's CRS system. The CRS obtains the necessary information (prices and availability by room category) and passes it on to the RBE (specifically to its back office). With this information and the configuration and data previously provided (step 0), the RBE obtains specific information on availability and price of each room number.

To carry out this step, the traditional CRS reservation system should be adapted, so that the CRS calls the RBE system sharing all the parameters of the availability query that the user has made (dates, occupants, number of rooms) and its result (prices and availability by room category, supplements, conditions etc...) for the RBE to be able to show the appropriate information on the hotel map to the user. This call can be made using any known pre-established procedure; for example, a full API type request that in a certain format, for example JSON ("JavaScript Object Notation", which is a simple text format for data exchange) or any other, can exchange data with the RBE system.

In one embodiment, for example, the IBE/CRS could generate the view (e.g., html) in which (if the release requirement is met) there would be an iframe where a call to the URL of the RBE would be embedded (Uniform Resource Locator), passing all the data of the availability query that the user has made, captured by the "fast booking". You could also use a security parameter (hash) so that this call cannot be made by any other outside system, without permission.

At this point, to be more optimal in terms of time, it should be avoided as much as possible, having to launch new queries with parameter changes (hotel, number of rooms, dates) of the availability query. Parameter changes could be made at 2 levels: in the CRS "fast booking", which is usually also on the results page (although it could be hidden for simplicity) and within the RBE itself. For this reason, the communication format between the CRS and the RBE (JSON) should be as complete as possible.

The application of promotional codes could also be taken into account. One of the solutions for this scenario is for the RBE system to call in the event of a promotional code request from the customer to obtain the validity of the code and the new availability/price result. Similarly, if there are special rates for registered customers (loyalty programs), it would be saved in the same way, RBE would consult according to customer registration and receive the prices from the CRS. Both parameters (promotion codes or loyalty program) are parameters that the IBE/CRS could pass in the URL. Also all the parameters of place of residence, device or any other parameter that may imply a price change.

It could also be the case that the client arrives at the reservation (fast booking) already logged in the system and the CRS will inform the logged client price directly in the first call, as well as the additional information related to the client level that is needed to initiate the RBE process and for the "pass through" step after step 2 of the CRS (which will be explained below). In one embodiment, if it arrives logged it would be passed as a parameter to the iframe; if log-in is performed in the results page, the iframe would be refreshed and the parameter would be passed again.
- The user is shown information about the hotel and each room (for example, through an interactive 3D map) and is also shown the availability and price information obtained in the previous step (for example, shown in the iframe/component website within the CRS reservation process mask). With all this information, the user selects (4) the specific room (or rooms) he/she wants.

To perform this step, in one embodiment, the traditional CRS reservation system is required to design the input element (iframe or web component) tailored to the RBE requirements or, in an alternative embodiment, to launch directly to an RBE immersive environment.
- Once the room is selected by the user in the RBE functionality, in one embodiment, a validation is launched (to the RBE functionality back) to check if by chance at the time of room selection another user had selected the same room number. If this is the case, the client is notified, for example, by means of a notice or message in the RBE environment shown; and the user would have to select another room.

For this check, in one embodiment, it is consulted an RBE database where the availability of the rooms is recorded (availability database); that is, whether on certain dates, each of the hotel rooms has been reserved or not. To maintain this database, apart from the occupancy or room reservation data that can be uploaded initially or periodically, the RBE system records, each time a reservation is made, the room (or rooms) reserved and the dates of the reservation.

Otherwise (the room has not undergone changes in availability at the time of selection), it would be passed (5) to the effective reservation of the room. In one embodiment, what is done is that it is passed to the usual CRS reservation process, specifically to the one known as step 2 (this is what is commonly known as a "pass through"); this "step 2" of the CRS is where the page of personal data and possible payment is presented and processed. The RBE would control the previous step (step 1) based, for example, on the price reported by the IBE and when the client selects the specific room, the RBE passes that information back to the CRS so that it finalizes the reservation directly with the client, requesting personal information and payment (if paid at that time and not at the hotel). In this pass through, the RBE functionality sends the informed room number to the CRS to finalize the reservation, and the RBE functionality informs the user of the room category, rate, regime and the final price reserved as informed base price of the category by the CRS (plus the increase or reduction according to the pricing rules for the specific room number).

To perform this step, in one embodiment, the CRS is required to have a direct link (also called deeplink) to step 2. And, in one embodiment, security measures are added (for example, some key encrypted or "hash"), to prevent unauthorized access (for example from robots).
- Then the hotel system (CRS) is informed (6) of the reservation made and the CRS, based on the informed parameters, confirms to the client (for example, in his/her voucher or pass and on the online confirmation page) the number of room and the terms of the reservation. Here the CRS must modify its traditional confirmation and voucher page, as it must indicate at least the specific room number reserved (as this information is not included in the normal reservations made until now) and perhaps other additional information, as the new price for having chosen a specific room.

In turn, the CRS notifies (71) the hotel (for example, the hotel's PMS functionality) that a reservation has been made for said room with the corresponding data (for example, date and reservation identification "booking ID").

The CRS can inform the hotel's PMS of the reservation in the same format as a normal reservation or modify that internal communication to also indicate the specific room number reserved. The reservation can be integrated into the PMS and it already assigns the specific room number automatically to the reservation; but that would mean (if the PMS does not already have it included) integrating with dozens of PMSs (having to modify them significantly) to include the room number, when actually the assignment process is usually a manual process in all hotels. In an alternative, simpler embodiment, the reservation will not be integrated into the PMS assigned to the room number but rather the hotel will assign it within its normal manual assignment process, like the rest of traditional reservations, with the difference that this assignment would not be free but would be assigned the room number that the user has already selected at the time of reservation.

In any case, it is convenient (if not it can be included directly in the PMS or in internal communication) to at least include the selected room number in the reservation comments.

The CRS also sends (72) a message to the RBE functionality support with the reserved room number and dates, to block that room for the appropriate dates (it is no longer available, because it has been reserved). In case of cancellations or modifications, RBE should also be informed of the change so that the room and/or dates blocking can be changed if necessary.

It could happen that when the CRS informs the RBE of the reservation of a specific room, in that minimum period of time (sometimes milliseconds) that has elapsed since the verification previously carried out (prior to step 5), that specific room is reserved by another user and the RBE returns that that specific room is occupied. This is very unlikely, but to avoid it, in one embodiment the RBE can be notified to pre-block the room number already in step 5; If the client ultimately does not confirm the reservation or a reasonable amount of time has elapsed (for example, 10 minutes) without the CRS sending the confirmed reservation message (72), said room is unlocked. If the message (72) arrives confirming the reservation, then that room is permanently blocked for those dates.
- In one embodiment, after receiving the message (72) from the CRS, the RBE functionality informs (8) the hotel at the time of confirmation of the reservation that a reservation with room number assignment has been made, also indicating CRS reservation locator. After receiving the information, the hotel assigns the selected room from the RBE reservation to the specific reservation (blocking the room), as it would do with any reservation it assigns each day, only, as indicated above, instead of assigning rooms according to hotel criteria, the room is already selected by the user in the reservation.

The communication of the room number to the hotel can be done through a previously established communication protocol or simply by an e-mail that the RBE functionality sends to the hotel with the reservation information. Thus, the room number can be informed by e-mail indicating the reservation number so that the receptionist can assign it manually in his/her work dynamics. Another alternative way to do it is to integrate that room number directly into the hotel's PMS, but this requires integration with the PMS used by each hotel, as indicated above. Hence, the email option is the minimum viable product (the option that involves minimal changes for the proposed solution to be viable).

The RBE functionality can make available to the reception a back (an access or communication between the hotel and the RBE support) where it can check arrivals with assignment in matrix format (similar to PMS) and it can generate reports or push notifications shall be generated according to the configuration by the hotel. The hotel staff (for example, the receptionist) will be able to check, if desired, on that monitor with access to the RBE, which reservations have been assigned to which room number from the RBE. This will be done in case there is any doubt about what is seen in the PMS or if it is wanted to have a repository to manually assign reservations in the PMS. In this same back with access to the RBE, the hotel can block (9) the rooms as desired in case of operational need and change the value of the "release" parameter. That is, the hotel staff can have a back office in communication with the RBE, to be able to modify the release parameters or availability of specific rooms on certain dates.

As previously explained, the RBE functionality has a pre-established time limit (release) defined by the hotel, to prevent RBE reservations from occurring in the usual allocation period of the rest of the reservations made manually by the reception. This time limit can be any, but is typically at least 24 hours or 48 hours, and can be up to 7 days for complexly managed inventory resort hotels. Thus, the RBE functionality can coexist with the traditional room assignment where a traditional assignment of a specific room to a reservation is made (through the PMS) (11); this occurs, for example, in the event that the reservation is made less in advance than this deadline.
- Days or weeks later, when the client arrives at the hotel (10) he/she already has his/her room assigned at check-in as booked in RBE. In the case of wanting to reassign the room, for any reason, RBE support allows reassignment by the reception. The RBE system itself or the hotel can send an email to the client informing of the change and/or the RBE system can inform the CRS with the change associated with the reservation number.

It should be noted that in the previous explanation it has been assumed that the user reserves a single room, but the same explanation would apply in the event that the user wants to reserve 2 or more rooms in the same reservation.

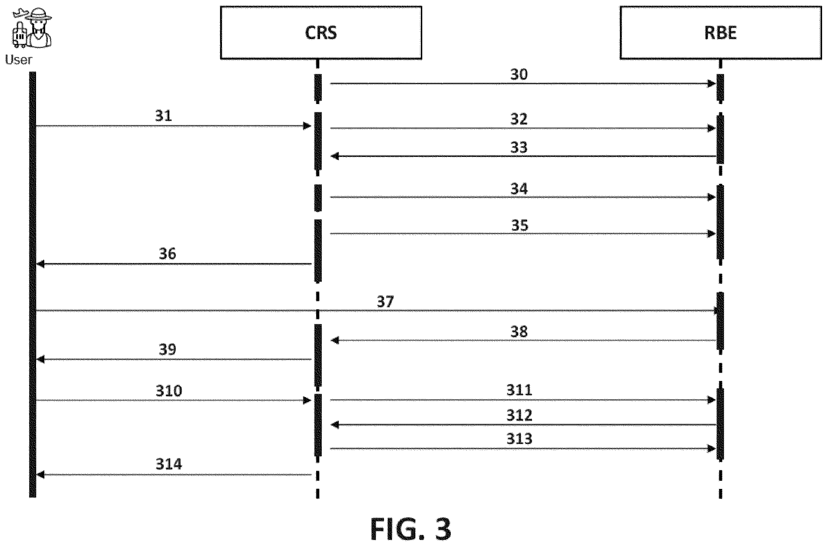

As seen in the previous explanation, the proposed RBE functionality can interact with existing hotel management systems to improve them and offer the new service of specific room selection at the time of reservation. Next, we will explain in more detail what this specific integration can be like. For the explanation, the example shown in Figure 3 will be used:
- The user (the hotel customer or someone on his/her behalf) performs, through a website (or a mobile application, better known as "app"), a search for one or more rooms in a hotel. The user accesses the website (or the application) through any electronic user device such as their mobile phone, smartphone, laptop, PC, tablet or any other. This search is collected (31) by the CRS module (CRS functionality or simply CRS) of the hotel through the web, as in the traditional case. The CRS queries (32) the RBE module (RBE functionality or simply RBE) with the hotel identification information and the specific dates, to see if the RBE functionality can be used; as explained above, basically what is checked is whether the time remaining for the stay is less or more than the minimum time ("release") established by the hotel to use the RBE system. If the RBE is available (the time to stay is longer than the release), the RBE sends a message (33) to the CRS saying that it is available. In another embodiment, the CRS system can access a shared table with the "release" value and do this check itself without consulting the RBE.

It should be noted that prior to the reservation, the CRS has sent the RBE system (30) the data necessary for the correct functioning of the process, including the mapping between the room categories and the room numbers (that is, which specific rooms belong to each category).
- If the RBE is available, the CRS asks the RBE for an input element (for example iframe or web component) to show to the client (34), to this end the CRS sends the RBE the search parameters (for example, dates of stay, number and type of people) and also sends (35) information on room availability and prices by room category.
- The user (36) is shown through the web page (the same one on which the reservation was made or by opening an additional page) or the application, information about the hotel and each room (for example, through an interactive map) and is also shown availability and pricing information. And the client, based on all the information, selects a specific room (or rooms) (37).
- The RBE notifies (38) the CRS that the room has been selected (for example, by sending the URL of the next CRS step) and can therefore proceed to the next step of the reservation, and the CRS notifies the user (39). In said next step of the reservation, the user can be offered the selection of possible extras for the reservation (insurance, accommodation regime...) or the reservation form to be filled out.
- When the client has already finished (310) the reservation (has filled out the forms, selected the possible extras...), the CRS indicates this (311) to the RBE so that it can check if the selected room is still available in the RBE system. That is, if in the time it took the user to make the reservation, another user has not reserved the same room. This check can also be done before, when the user selects the room.
- If the room is still available, the RBE notifies the CRS (312) and the CRS verifies that the payment or required payment transaction (the user may not have to pay at that time but the user must only enter a number to secure the reservation) has been made correctly and indicates it to the RBE (313). The RBE is notified of this to indicate that the reservation is correct and that the room number in question should remain blocked as reserved in its room availability database.

If the room is not available, the RBE module notifies the CRS and either the reservation process is completed with an error message to the user, or in an alternative embodiment, it returns to step (36) in which the client is shown updated information on availability and prices for each room. And the client, based on all the information, selects a specific room (or rooms).
- Finally (314), the CRS sends or shows the customer the voucher with the specific room (or rooms) number selected and, normally, the reservation confirmation number.

Steps 32, 34, 36, 311, 313 and 314 are the main actions that a CRS in the traditional procedure does not perform or performs in another way; in other words, they are the main adaptations or changes that must be made to the CRS so that it is correctly integrated with the RBE module.

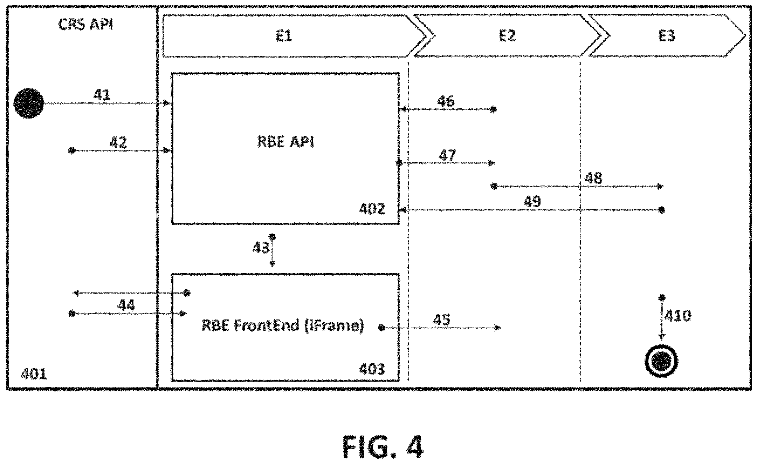

For greater clarity, the following explains what the flow of actions would be like in the user/customer navigation in the RBE reservation process (which is also called the customer journey, or more commonly "journey"), or rather, the actions that this process entails in the integration of the CRS functionality with the RBE. This has already been previously explained with figure 3, but now it will be explained from another point of view, using the example shown in figure 4:
As seen in Figure 4, the process has been divided into three general stages, stage 1 (E1) which is the CRS reservation process in its front part or interface part (better known as "frontend"); stage 2 (E2), the step that is the CRS reservation process in its data collection part for the formalization of the reservation and extras, and stage 3 (E3) or confirmation.

When the user initiates the search for the reservation (or even as a previous step), the CRS (401) (more specifically the CRS through its API interface) sends (41) to the RBE module the data necessary for the correct operation of the process, primarily including mapping between room categories and room numbers (i.e. which specific rooms belong to each category). As seen in Figure 4, in the RBE it is distinguished the part (API) that allows access to the RBE (402) by the CRS and the frontend or interface with the user of the RBE (403) (via an input element such as an iframe or a web component).

With the search parameters (hotel identification, whether more than one different hotel can be booked on the same page, and dates of stay) the CRS consults the RBE system (42), to check if the RBE functionality can be used, that is, if the time remaining for the stay is less or greater than the minimum time ("release"). If the RBE is available, a request (43) for an input element is made to the RBE (for example iframe or web component), for which the search parameters are sent to the RBE. In turn, the RBE requests and receives information on room availability and prices from the CRS (44). The user is then shown information about the hotel and each room, availability and prices (for example, through an interactive 2D or 3D map) and the user selects a specific room (or rooms).

When the selection has occurred, the RBE notifies (45) the CRS that it can proceed to the next step of the room reservation (for example, by sending the link or address, such as the URL, of the next CRS step). When the client has already finished or wants to finish the reservation, the CRS indicates this (46) to the RBE so that it can check if the selected room is still available in the RBE system.

If the room is still available, the RBE notifies the CRS (47) and proceeds to the payment (or in general, to the transaction of means of payment necessary to secure the reservation) and if this is correct, the transaction is considered correct (48). The RBE is notified (49) of this to indicate that the reservation is correct and that the room number in question should be blocked. Finally, the CRS sends or shows the customer on the screen (410) the voucher with the specific number of the selected room (or rooms).

The proposed invention presents, in addition to those already mentioned above, the following advantages over the systems and methods currently used:
**Immersive process.** Improvement in customer experience through an immersive process by means of a hyper-realistic model of the hotel. In one embodiment this model is in 3D and may be an interactive aerial 3D model. For example, you could have 180° views from the room and 360° views of the interior of the room. In this way, the client, in addition to being able to reserve a specific room, can explore the hotel facilities (restaurants, swimming pools, gym, beach, etc.) about the hotel itself (location, description, multimedia) in a simple and intuitive way and make his or her purchase taking into account where the hotel facilities are in relation to his/her room.

**Greater simplicity and effectiveness:** The distraction (noise) on the web due to the price, policies... is much less by simplifying navigation, in the same way the offer messages are much more visible as it is a much cleaner process. In a test, a 100% increase in interaction was observed, providing value to the consumer by obtaining a better rate in the application of offers that would otherwise be diluted among the information of the traditional process. In addition, the system will allow knowing the availability of each of the rooms for the dates selected by the client.

**Hyper-customization and product range.** The client goes from currently reserving a type of room to reserving his/her room based on the specific equipment/attributes of each room with filters (double bed, morning/afternoon sun, etc...) in a disruptive process through which hyper-customizes his/her purchase like he/she cannot do in any other sales channel. That is, the client can select his/her room by facilities/attributes such as type of bed, room size, orientation to the sun, square meters, furniture, etc. Thus, the client can reserve the specific room (room number), with the features, equipment, location and exact orientation.

The same room in which the client previously stayed can be even recommended (for example, through the customer relationship management system, better known by its acronym, CRM) or a recommendation for similar rooms in other hotels based on his/her preferences can be made. Likewise, rooms better rated by other clients can be recommended. The system may also allow rooms to be linked, providing a clear improvement in customer experience in the family or group segment, ensuring the location of both rooms. With this functionality, the options increase for clients who want to stay in connecting rooms.

**Optimal inventory management.** For example, being able to link communicating rooms allows the hotel a greater possibility of selling the same unit in two sales formats without generating inventory conflicts ("overbooking"). In addition, the proposed solution reduces the complexity of the distribution by room types by opening the range with the selection of facilities/attributes. In this way, the number of categories to be distributed can be reduced, allowing for a more optimal distribution through sales channels and the average daily rate can be optimized without generating room availability conflicts.

**Minimizing the number of queries:** The Call Center and reception have a high percentage of calls related to questions about room equipment (types of beds...), locations (upstairs...), hotel facilities (air conditioning/temperature/depth of pools...) that will be resolved in this process in an intuitive manner by downloading calls and queries, with the consequent saving of both human and equipment resources (number of telephone lines, occupation of the lines...).

**Economic benefits.** The hyper-segmentation of the product allows pricing by room number based on equipment, attributes, visits to that room, customer comments, etc. That way, the same room category can have different prices depending on each room number and each room will be unique for that date. By having this functionality, it is also possible to start with cheaper prices than other distributors without breaking the famous "price parity", in rooms of the same category by not competing by room category but by room number, a product that does not exist in other sales channels. The potential for increased revenue by upselling room type increases because the customer can clearly and easily perceive the value obtained by a higher priced product. In this process, the door is opened to the sale of complementary products through cross-selling by being able to apply sales techniques in the visit of the facilities in the same process on the 3D model of the hotel (SPA, golf, excursions, diving, romantic dinners, etc...). This process becomes a powerful assisted sales tool, since the agent will be able to customize the consumer's room or inform him/her about the hotel facilities at the time of purchase, increasing the chances of conversion.

In addition, intermediation costs are reduced by taking advantage of the visibility to the hotel website of other sales channels (travel agencies, associated pages...). With this process, the user when going to consult information/prices will find a product assortment that does not exist in other sales channels, increasing the possibility of conversion of that visit. Furthermore, in tests carried out, a greater spontaneous recommendation to the client has been verified.

**Optimization in direct marketing and conversation with the client.** Including the attributes/facilities of the rooms allows us to establish a unique conversation with the customer through exclusive attributes and products that no other channel can initiate by not having the same product. This allows an increase in opening and reading rates in the case of emails and a more personalized interaction with the customer through the different digital assets.

**Making brand values and attributes tangible.** Immersive navigation allows you to activate conversion levers and improve the perception of value (price) previously unthinkable in traditional reservation processes with content such as: Those related to brand values, such as environmental policies (responsible tourism) carried out in relation with the hotel environment (oceans, energy and waste management, flora and fauna care), establishing a conversation with the client where the brand values are made tangible in the product and operation. Those related to product and brand attributes such as size of the resorts, meters of beach, location of buildings, facilities for children's or adult entertainment or care of the body and mind and relationship/interaction with the environment.

In this text, the term "comprises" and its derivations (such as "understanding", etc.) should not be understood in an exclusive sense, that is, these terms should not be interpreted as excluding the possibility that that being described and defined may include more elements, stages, etc.

Once the nature of the invention has been sufficiently described, as well as the way it is carried out in practice, it must be noted that its different parts shall be manufactured in a variety of materials, sizes and shapes, being able to also introduce into its constitution or procedure those variations that practice may advise, as long as they do not alter the fundamental principle of the present invention.

This detailed description is provided to assist in a complete understanding of the invention. Therefore, those skilled in the art will recognize that variations, changes or modifications of the embodiments described herein may be carried out without departing from the scope of protection of the invention. Also, the description of functions and well-known elements are omitted for clarity and conciseness. The description and drawings merely illustrate the principles of the invention. Therefore, it should be considered that those skilled in the art will be able to devise various arrangements which, although not explicitly described or shown herein, represent the principles of the invention and are included within its scope. Furthermore, all examples described herein are provided primarily for pedagogical reasons to help the reader understand the principles of the invention and the concepts contributed by the inventor(s) to improve the art, and should be considered non-limiting with respect to such specifically described examples and conditions. Furthermore, everything set forth in this document related to the principles, aspects and embodiments of the invention, as well as specific examples thereof, encompass equivalences thereof.

Although the present invention has been described with reference to specific embodiments, those skilled in the art should understand that the foregoing and various other changes, omissions and additions in the form and detail thereof may be made without departing from the scope of the invention as defined by the following claims.

## Claims

1. A method for improved room reservation and management at an accommodation facility, wherein the method comprises the following steps performed in a module called enhanced reservation service module, RBE module, of at least one server:
a) Receiving from a central reservation module of the accommodation facility, a message with information about an accommodation reservation requested by a user using an electronic user device, including such information at least the dates of the accommodation;
b) If the period of time from when the reservation request is made to the start of the accommodation is greater than or equal to a pre-established minimum time, displaying to the user on the electronic device information about the rooms of the facility including at least location within the facility, availability and price for the dates of accommodation of each room; said information being obtained from at least the information received from the central reservation module on price and availability of each room category and information stored in an availability database of the RBE module;
c) Receiving from the user's electronic device the selection of one or more rooms for the reservation;
d) Checking in the availability database if the one or more selected rooms are still available for the accommodation dates and if so, sending a message to the central reservation module indicating that reservation may continue;
e) When a confirmation is received from the central reservation module that the reservation of one or more rooms has been correctly made by the user, marking in the availability database said one or more rooms selected as not available for the dates of accommodation.

2. Method according to claim 1, wherein in step b) the information is displayed on the user's electronic device using an interactive map.

3. Method according to claim 2, d where in step b) the information is shown using an interactive 3D map.

4. Method according to any of the previous claims, wherein the central reservation module and the RBE module are located on the same server.

5. Method according to any of the previous claims 1-3, wherein the central reservation module and the RBE module are located on different servers communicated by one or more communication networks.

6. Method according to any of the previous claims wherein the value of the pre-established minimum time of step b), can be modified from the accommodation facility.

7. Method according to any of the previous claims wherein if in the verification of step d) it is determined that the one or more rooms are still available, said one or more rooms selected are marked in the availability database as not available for the accommodation dates and if after a pre-established maximum time interval the reservation confirmation has not been received, one or more selected rooms are marked again in the availability database as available for the dates of the accommodation.

8. Method according to any of the previous claims wherein, after confirming that the reservation has been correctly made, the central reservation module sends a reservation confirmation voucher to the user's electronic device that includes the numbers of the one or more selected rooms and sends to a reservation management module of the accommodation facility, information about the reservation including the numbers of the one or more selected rooms.

9. Method according to any of the previous claims wherein if in the verification of step d) it is determined that the one or more rooms are not available, a message is sent to the central reservation module indicating that the one or more rooms are not available, and returning to step b).

10. Method according to any of the previous claims wherein the user electronic device is a mobile phone, a laptop, a PC or a tablet.

11. An electronic system for improved reservation and management of rooms in an accommodation facility, wherein the system comprises:
- A central reservation module configured to provide a reservation website or application to allow a user to make an accommodation reservation from a user's electronic device, the module being configured to receive reservation information from the user through the website or application and to confirm the correct completion thereof, and to communicate with an improved reservation service module;
- The improved reservation service module, RBE module, which comprises an availability database and is configured to:
- Receive from the central reservation module of the accommodation facility a message with information about an accommodation reservation requested by a user through the website or application, including such information at least the dates of the accommodation;
- If the period of time from when the reservation request is made to the start of the accommodation is greater than or equal to a pre-established minimum time, show the user, through the website or application, information about the rooms of the facility, including at least the location within the facility, availability and price for each room's accommodation dates; said information being obtained from at least information received from a central reservation module on price and availability of each room category and information stored in the availability database;
- Receive from the user's electronic device through the website or application, the selection of one or more rooms for the reservation;
- Check the availability database if the one or more selected rooms are still available for the dates of the accommodation and if so, send a message to the central reservation module indicating that the reservation may continue;
- When a confirmation is received from the central reservation module that the reservation of one or more rooms has been correctly made by the user, mark in the availability database said one or more rooms selected as not available for the dates of the accommodation.

12. System according to claim 11, wherein the information is shown to the user through an interactive 2D or 3D map.

13. System according to claims 11 or 12 wherein the central reservation module and the RBE module are located on the same server.

14. System according to claims 11 or 12, wherein the central reservation module and the RBE module are located on different servers communicated by one or more communication networks.

15. A non-transitory computer-readable medium that stores a computer program comprising instructions for causing a computing device to execute the program to perform the method defined according to any of claims 1-10.
